# EUROPEAN PATENT APPLICATION

(11) **EP 2 143 857 A1**
(43) Date of publication of application: **13.01.2010**
(21) Application number: 08750435.3
(22) Date of filing: 23.04.2008
(51) Int. Cl.: E04H 4/14, F24J 2/24

(54) **BORDER FOR SWIMMING POOLS**

(30) Priority: 09.05.2007 ES 200701248
(71) Applicant: Aguilera Galeote, José Antonio, 29590 Campanillas - Malaga (ES)
(72) Inventor: Aguilera Galeote, José Antonio, 29590 Campanillas - Malaga (ES)
(74) Representative: Urizar Anasagasti, Jesus Maria
(86) International application number: PCT/ES2008/070076
(87) International publication number: WO 2008/139015

(57) **Abstract**

The invention relates to a border for swimming pools, consisting of slabs (1) set in the ground around a swimming pool or in bordering areas, each slab internally forms a series of ducts (4) which are perpendicular to the edge of the pool and communicate with collectors (2-3) which are located on the sides and, in turn, communicate with outer ducts (9) leading downwards into the pool (11), where they connect to a heat dissipator (10) attached to a lateral wall of the pool, forming a closed circuit therewith through which a fluid circulates, said fluid raising the temperature of the water in the swimming pool when heated, by the rays of sunlight, in the slabs (1) exposed to the sun, and guided by a thermosiphon system or by a pumping action, to the dissipator (10) arranged in the water.

## Description

### Object of the invention

The present invention relates to a border for swimming pools, consisting of slabs set in the ground around a swimming pool or in bordering areas and having the purpose, on one hand, of heating the water of the swimming pool and, on the other, serving as a safety element for users, preventing falls and, should falls occur, hitting against the concrete or the hard ground of all pools.

### Background of the Invention

Different types of soft borders for swimming pools are known which are placed during construction or later as a perimetric rug, such as the one that is object of this invention.

Document ES-8703007 is also known, describing a solar heating device comprising several rather shallow tubs in a number that is calculated depending on the desired calorific power, in which each tub has a slab transparent to the infrared rays of sunlight, an anti-mist slab transparent to the infrared rays of sunlight, a heat catcher, a water feed coming from the swimming pool, a water flow regulator, a water level regulator, and a water drainage system with anti-waves and anti-reflux for the return of water to the swimming pool, and the tubs being arranged in the contour of the swimming pool in replacement of the edge they replace, so that complementary heating of the swimming pool in this perimetric area is achieved.

### Description of the Invention

The border of the invention has a series of slabs which are located around the swimming pool or in bordering areas. Each of these slabs internally forms a series of ducts, arranged perpendicular to the edge of the swimming pool, which communicate with collectors which are located on the sides, or parallel to the edge of the swimming pool and, in turn, communicate with outer ducts running into the swimming pool, where they connect to a heat dissipator attached to the lateral wall of the swimming pool. A fluid circulates throughout this closed circuit, said fluid raising the temperature of the water in the swimming pool when heated, by the rays of sunlight, in the area of the slabs located on the edge, and guided by a thermosiphon system or by a pumping action due to inertia, to the dissipator placed in the water.

The slabs forming this border are made of rubber and the previously mentioned transverse ducts and longitudinal collectors are formed therein. This intermediate layer of rubber has a layer of neoprene on the upper part and is provided with a refracting sheet on the lower part which concentrates the calorific power of the sun in the ducts. Under the refracting sheet, each of the slabs forming this element has a layer of softer rubber forming a soft seat for these slabs, making them trafficable for users, particularly in the corner because the cavity defining the fluid intake collector, protecting users from accidentally hitting against the swimming pool, is located under it.

### Description of the Drawings

To complement the description being made and for the purpose of facilitating the understanding of the features of the invention, a set of drawings is attached to the present specification in which the following has been depicted with an illustrative and non-limiting character:

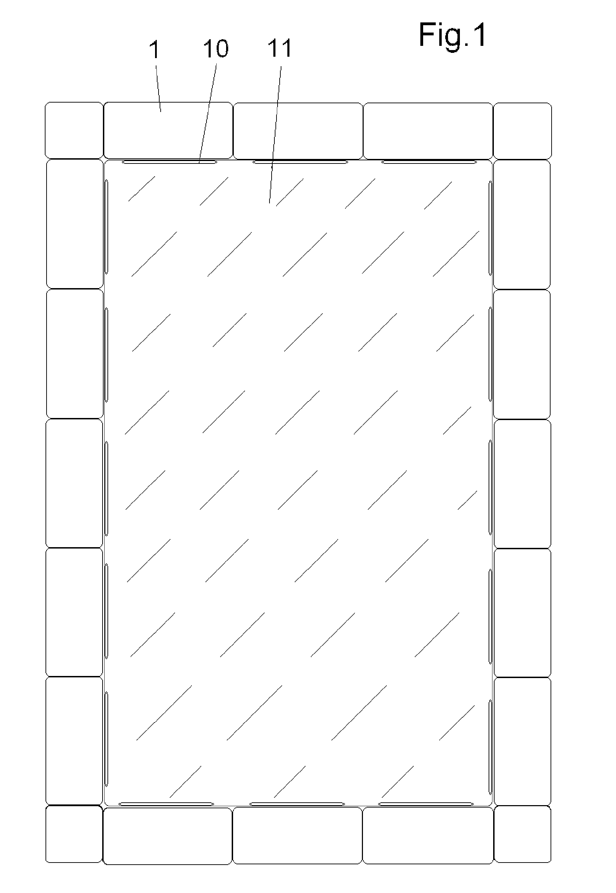

Figure 1 shows a general plan view of a swimming pool provided with a border according to the present invention.

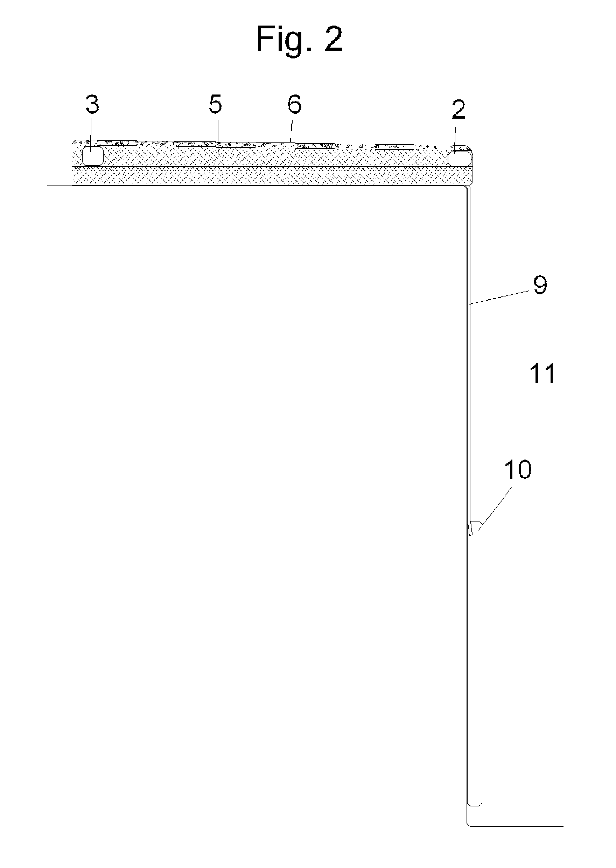

Figure 2 depicts a vertical section of a swimming pool (11) provided with this type of border.

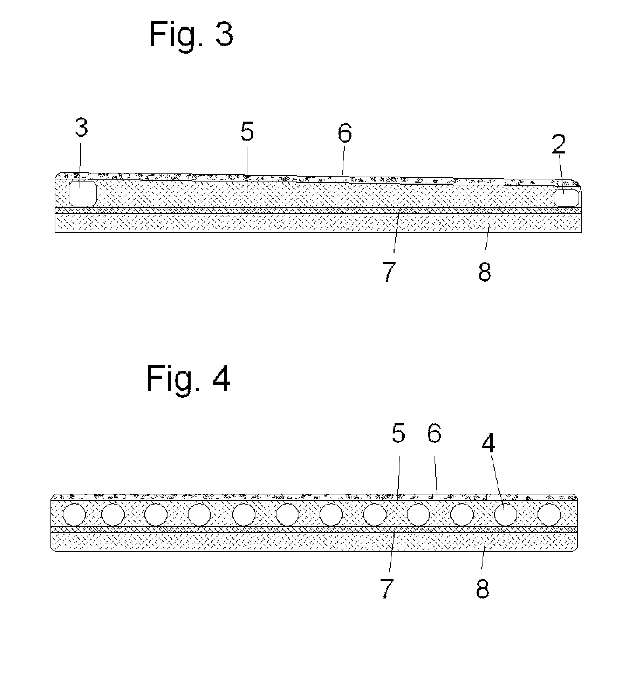

Figures 3 and 4 depict respective sections, according to planes transverse and parallel to the swimming pool, of a border having these features.

### Preferred Embodiment of the Invention

As can be observed in the aforementioned figures, the invention consists of rubber slabs (1) set in the ground around a swimming pool (11), through which a fluid internally circulates, raising the temperature of the water of the swimming pool when heated by the rays of sunlight.

The shape and size of the slabs depend on each swimming pool, as they adapt to its contour, therefore preventing accidents when falling or hitting the edge thereof.

Said slabs internally have a fluid circulation circuit formed by ducts (4), made using the same material (5) as the slab, said ducts being formed during manufacture. These transverse ducts (4) communicate with collectors (2-3) located on the sides, parallel in the swimming pool.

These ducts and collectors form a closed circuit for a thermal fluid, which is heated in and goes from the lower collector (2) up to the upper or hot fluid collector (3), since the slab has an unevenness between the two collectors to facilitate this movement by thermosiphon.

These collectors are joined to a heat dissipator (10) located inside the swimming pool (11) by means of a pipe (9) with a small section so that it enters therein under pressure and facilitates the outlet of the fluid towards the cold fluid collector (2). If necessary, a small pump can be installed which drives the fluid towards the dissipator when the pressure increases.

Each slab (1) forms a closed circuit, so they are independent, such that heat is provided at as many points of the swimming pool as there are slabs (1).

These slabs (1) are made of rubber (5) and the transverse ducts (4) and longitudinal collectors (2-3) are formed in their very structure. This layer of rubber (5) has a layer of neoprene (6) on the upper part and a refracting sheet (7) on the lower part which concentrates the calorific power of the sun in the ducts (4). Under the refracting sheet (7), it has a layer (8) of softer rubber forming a soft and insulating seat for these slabs, making them trafficable for users and preventing accidents in the case of falls or hitting against them, particularly on the edge where it is even softer due to the existence of the hollow duct (2) partially filled with thermal fluid.

Having sufficiently described the nature of the invention as well as a preferred embodiment, it is stated for all intents and purposes that the materials, shape, size and arrangement of the described elements could be modified provided this does not involve any alteration of the essential features of the invention claimed below:

## Claims

1. A border for swimming pools, consisting of slabs (1) set in the ground around a swimming pool or in bordering areas, **characterized in that** each of these slabs internally forms a series of ducts (4) which are perpendicular to the edge the swimming pool and communicate with respective collectors (2-3) which are located on the sides, parallel to the edge of the swimming pool, and, in turn, communicate with respective outer ducts (9) leading downwards into the swimming pool (11), where they connect to a heat dissipator (10) attached to the lateral wall of the swimming pool, forming a closed circuit therewith through which a fluid circulates, said fluid raising the temperature of the water in the swimming pool when heated, by the rays of sunlight, in the slabs (1) exposed to the sun, and guided, by a thermosiphon system or by a pumping action, to the dissipator (10) arranged in the water, while at the same time forming a soft element, particularly in the corner due to the cavity defined by the collector (2), protecting users from accidentally hitting against the pool.

2. The border for swimming pools according to the previous claim, **characterized in that** the each of these slabs
(1) is made of rubber, in which transverse ducts (4) and the longitudinal collectors (2-3) have been defined, and it has a layer of neoprene (6) on the upper part and is provided with a refracting sheet (7) on the lower part which concentrates the calorific power of the sun in the ducts (4).

3. The border for swimming pools according to the previous claim, **characterized in that** under the refracting sheet (7), each of the slabs (1) forming this element has a layer (8) of softer rubber forming a soft seat for these slabs, making them trafficable for users.
